Europäisches Patentamt

European Patent Office

Office européen des brevets

(19)

(11) Veröffentlichungsnummer: **0 067 983**
**B1**

(12)

# EUROPÄISCHE PATENTSCHRIFT

(45) Veröffentlichungstag der Patentschrift:
16.01.85

(21) Anmeldenummer: 82104807.1

(22) Anmeldetag: 02.06.82

(51) Int. Cl.⁴: **H 01 H 1/02, B 23 K 35/00**

(54) **Elektrisches Kontaktstück.**

(30) Priorität: **12.06.81 DE 3123357**

(43) Veröffentlichungstag der Anmeldung:
**29.12.82 Patentblatt 82/52**

(45) Bekanntmachung des Hinweises auf die Patenterteilung:
**16.01.85 Patentblatt 85/3**

(84) Benannte Vertragsstaaten:
**CH DE FR GB IT LI SE**

(56) Entgegenhaltungen:
**EP - A - 0 030 261**
**DE - A - 2 417 060**
**FR - A - 2 328 541**
**US - A - 3 440 039**

(73) Patentinhaber: **Degussa Aktiengesellschaft,
Weissfrauenstrasse 9, D-6000 Frankfurt am Main 1 (DE)**

(72) Erfinder: **Malikowski, Willi, Brentanoplatz 11,
D-8750 Aschaffenburg (DE)**
Erfinder: **Szulczyk, Andreas, Dipl.-Ing., Im
Hirtengarten 31, D-6464 Linsengericht 5 (DE)**
Erfinder: **Wolmer, Roger, Ginnhelmer Hohl 20,
D-6000 Frankfurt 50 (DE)**
Erfinder: **Böhm, Wolfgang, Dr., Schillerstrasse 12,
D-8755 Alzenau (DE)**

## Beschreibung

Die Erfindung betrifft ein elektrisches Kontaktstück aus einem Silber/Metalloxid-Werkstoff als Kontaktauflage, einem Träger aus Kupfer oder Eisen und einer Zwischenschicht. Die Zwischenschicht kann dabei als Lot zur Verbindung Kontaktauflage - Träger dienen, oder als lötfähige Schicht auf dem Kontaktstück zum Anlöten auf den Träger mittels eines konventionellen Lotes.

Silber/Metalloxid-Werkstoffe werden aufgrund ihrer günstigen schalttechnischen Eigenschaften als Kontaktmaterial in Schaltgeräten mit hohen Schaltzahlen bei kleiner oder mittlerer Strombelastung in grossem Umfang eingesetzt. Die wichtigsten Vertreter dieser Verbundwerkstoffgruppe sind Silber/Cadmiumoxid, Silber/Zinnoxid, Silber/Zinkoxid und Silber/Indiumoxid.

Infolge des hohen Metalloxidgehaltes sind die Kontaktauflagen nach derzeitigem Stand der Technik nicht direkt auf metallische Kontaktträger auflötbar. Für die Anwendung als Kontaktmaterial in elektrischen Schaltgeräten müssen die Kontaktauflagen daher lötfähig gemacht werden. Aus diesem Grund werden die Kontaktauflagen einseitig mit einer Schicht aus einem gut löt- oder schweissbarem Metall oder einer Metallegierung versehen.

So ist es beispielsweise bekannt, die aus Silberlegierungen bestehenden Werkstücke nur einseitig innerlich zu oxydieren (ca. 70% der Blechdicke) und die nichtoxydierte metallische Schicht als lötfähige Fläche zu verwenden (DE-AS Nr. 1033815). Das Verfahren ist jedoch nur bei Silberlegierungen anwendbar, die sich innerlich oxydieren lassen und im oxydierten Zustand noch ausreichend duktil sind, so dass sie sich zum Fertigteil umformen lassen. Bei Silberlegierungen, die im oxydierten Zustand nicht ausreichend duktil sind, erfolgt die Formgebung vor der Oxydation. Hierbei wird das Vormaterial zur Erzielung einer lötbaren Schicht mit Silber plattiert. Die Kontaktauflagen werden dann als Fertigteil oxydiert (DE-AS Nrn. 2334160 und 1803502). Bei längeren Oxydationszeiten verliert die Silberschicht jedoch an Haftfestigkeit und die fertigen Kontakauflagen lösen sich im Betrieb von den Kontaktträgern ab. Zudem bilden sich in der Probemitte Inhomogenitäten, wie Kirkendall-Poren, aus, die u.U. eine reduzierte Lebensdauer der Kontaktauflage zur Folge haben.

Pulvermetallurgisch hergestellte Silber/Metalloxid-Kontakte können durch Anpressen und gemeinsames Sintern mit einer lötfähigen Silberschicht versehen werden (DE-AS Nr. 1187333). Dieses Verfahren ist jedoch teuer und nur bei pulvermetallurgisch hergestellten Silber/Metalloxid-Kontaktauflagen anwendbar.

Aus der DE-AS Nr. 1090484 ist bekannt, Silber/Cadmium-Legierungen einseitig mit einer Silberlotschicht zu versehen und erst danach innerlich zu oxydieren. Das Verfahren hat aber den Nachteil, dass es nur bei innerlich oxydierbaren Kontaktmaterialien anwendbar ist. Weiterhin führen hier metallphysikalisch bedingte Erscheinungen zu verfahrenstechnischen Schwierigkeiten, die später bei der Lötung der Kontaktstücke Verarbeitungsprobleme mit sich bringen (z.B. Anstieg der Arbeitstemperatur des Lotes).

In der DE-AS Nr. 1232282 wird ein Lötverfahren beschrieben, bei dem die zu lötende Kontaktfläche mit einem Zinn/Blei-Weichlot vorbelotet und anschliessend mit einem üblichen Silberhartlot der Kontakt auf den Kontaktträger aufgelötet wird. Der Nachteil dieses Verfahrens besteht darin, dass die zu verbindenden Teile mehrere Minuten auf Temperaturen oberhalb der Arbeitstemperatur des Silberhartlotes erhitzt werden müssen, um eine einwandfreie Verbindung zu gewährleisten. Bestehen die Kontaktträger aus ausgehärteten Legierungen, so kann der Aushärtungseffekt verloren gehen.

Ausserdem ist es bekannt (DE-AS Nr. 2365450), dem Silber/Metalloxid-Werkstoff eine lötbare, den Verbundwerkstoff benetzende Silber/Kupfer-Legierung mit 10 oder 28% Kupfer zu hintergiessen und anschliessend mit dem Kontaktträger zu verlöten. Auch Kupfer/Silber-Legierungen mit 8 bis 40% Silber sind für diesen Zweck schon vorgeschlagen worden (DE-OS Nr. 2941423). Aber auch diese lötfähigen Schichten haben sich nicht bei allen Silber/Metalloxid-Werkstoffen als genügend haftfest erwiesen.

Insbesondere die neuerdings bevorzugt verwendeten $Ag/SnO_2$-Kontaktwerkstoffe mit erhöhtem $SnO_2$-Gehalt lassen sich schlecht walzplattieren. Des weiteren hat anplattiertes Silber, verglichen mit dem dispersionsgehärteten Kontaktwerkstoff, eine geringe mechanische Festigkeit. Durch die thermomechanische Beanspruchung beim Schalten kann bereits bei niedrigen Schaltzahlen im Silber ein Riss entstehen, der zum Abschälen der Kontaktauflagen führt.

Anplattiertes Kupfer besitzt, verglichen mit Silber, eine erhöhte Festigkeit, aber bei den im Verlauf des Herstellungsprozesses erforderlichen Wärmebehandlungen entstehen im Übergangsbereich zwischen lötbarer Schicht und $Ag/SnO_2$-Schicht Porensäume. Im Verlauf der Schaltbeanspruchung läuft entlang der Poren ein Riss, der schon bei niedrigen Schaltzahlen ebenfalls zum Abschälen der Kontaktauflage führen kann.

Reaktivlote, die Phosphor enthalten (DE-OS Nr. 2438922), erzeugen durch Reduktion des $SnO_2$ ebenfalls Porenbildung. Im Schaltversuch fallen derart vorbelotete oder gelötete Kontaktauflagen bei entsprechender Belastung durch Trennungen im Bereich der geschädigten Zone ab.

Es war daher Aufgabe der vorliegenden Erfindung, ein elektrisches Kontaktstück aus einem Silber/Metalloxid-Werkstoff als Kontaktauflage, einem Träger aus Kupfer oder Eisen und einer Zwischenschicht zu finden, das auch bei hohen Schaltzahlen eine ausreichende Haftfestigkeit der Kontaktauflage auf dem Kontaktträger liefert.

Diese Aufgabe wurde erfindungsgemäss dadurch gelöst, dass die Zwischenschicht aus einer Silberlegierung mit 2 bis 12 Gew.-% Zinn, Indium und/oder Germanium, Rest Silber besteht.

Beim Hintergiessen solcher Legierungen auf Silber/Metalloxid-Werkstoffe, insbesondere Silber/Zinnoxid, ergibt sich eine feste Haftung der angegossenen Schicht auf dem Kontaktwerkstoff. Spröde Phasen, die zu vorzeitigem Ablösen vom Träger führen, treten nicht auf. Trotz der fehlenden Reduktion des $SnO_2$ findet aber überraschenderweise eine gute Benetzung der Oberfläche des Kontaktwerkstoffes $Ag/SnO_2$ statt. Unerwarteterweise bereitet der, verglichen mit Ag/Cu-Eutektikum, teilweise höhere Schmelzpunkt der eingesetzten Legierungen keine Schwierigkeiten bei der Verarbeitung und bei den mechanischen Eigenschaften.

Zur Anpassung der Arbeitstemperatur der Legierungen an den Kontaktwerkstoff können vorteilhafterweise ohne Auswirkung auf die Verbindungszone weitere Zusätze einlegiert werden, solange es sich um Gehalte unter 10 Gew.-% handelt. Die Zusätze können Kadmium und/oder Kupfer und/oder Blei sein. Ein Zusatz von Lithium (max. 0,5 Gew.-%) senkt ebenfalls den Schmelzpunkt und wirkt benetzungsfördernd.

Zur Vermeidung von spröden Phasen an der Übergangszone zum Kontaktwerkstoff ist die Zinn-, Indium- und Germaniumkonzentration auf höchstens 12 Gew.-% begrenzt. Da durch Korngrenzendiffusion eine Anreicherung der Legierungselemente auf Grosswinkelkorngrenzen erfolgen kann, wurde als besonders günstiger Konzentrationsbereich 6 bis 10 Gew.-% Zinn und/oder Indium und/oder Germanium gefunden. Hierdurch wird eine Versprödung des $Ag/SnO_2$-Kontaktwerkstoffes in der Nähe der hintergossenen Zwischenschicht vermieden. Durch diese Massnahmen ergibt sich aufgrund fehlender Ablösung der Kontaktauflagen eine vollständige Ausnutzung des Kontaktmaterials. Dies führt im Schaltgerät zu deutlich höheren Schaltzahlen.

Diese Zwischenschicht kann direkt mit dem Kontaktträger verschmolzen werden, das heisst, sie kann auch als Lot dienen, oder vorteilhafterweise mit einem üblichen Hartlot auf den Kontaktträger aufgelötet werden.

Folgende Beispiele sollen das erfindungsgemässe elektrische Kontaktstück näher charakterisieren.

1. Pulvermetallurgisch hergestelltes $Ag/SnO_2$ mit 12 Gew.-% $SnO_2$ wird mit Silberlegierungen mit 6 Gew.-% Zinn, Indium oder Germanium unter Stickstoff bei 950° C durch Auflegen einer flächengleichen Folie hintergossen. Die so hergestellten lötbaren Kontaktauflagen können mit Hartlot (z.B. L-Ag45Cd) auf einen Träger aus Stahl aufgelötet werden.

2. Innerlich oxidiertes AgSnIn wird nach mechanischer Reinigung der Oberfläche mit AgSn8, AgIn8 oder AgGe6 durch Abschmelzen eines Drahtes bei 950° C unter Stickstoff hintergossen und mit Hartlot L-Ag45Cd auf einen Kontaktträger aus Kupfer aufgelötet.

3. Pulvermetallurgisch hergestelltes $Ag/SnO_2$ mit 12 Gew.-% $SnO_2$ wird mit Ag/Sn/Ge 90:9:1, Ag/Sn/In 90:9:1 oder Ag/Sn/Pb 90:9:1 unter Stickstoff bei 830 bis 870° C durch Auflegen einer flächengleichen Folie hintergossen. Anschliessend können die nun lötbaren Silber/Zinnoxid-Kontakte mit einem Hartlot L-Ag40Cd oder L-Ag45Cd nach DIN 8513 auf Kontaktträger aus Kupfer oder Eisen aufgelötet werden.

Alle so hergestellten Kontaktstücke zeigten im Schaltversuch eine ausgezeichnete Haftfestigkeit der Kontaktauflage auf dem Kontaktträger. Auch nach sehr hohen Schaltzahlen traten noch keine Kontakttrennungen oder Risse auf.

**Patentansprüche**

1. Elektrisches Kontaktstück aus einem Silber/Metalloxid-Werkstoff als Kontaktauflage, einem Träger aus Kupfer oder Eisen und einer Zwischenschicht, dadurch gekennzeichnet, dass die Zwischenschicht aus einer Silberlegierung mit 2 bis 12 Gew.-% Zinn, Indium und/oder Germanium, Rest Silber besteht.

2. Elektrisches Kontaktstück nach Anspruch 1, dadurch gekennzeichnet, dass die Silberlegierung 6 bis 10 Gew.-% Zinn, Indium und/oder Germanium enthält.

3. Elektrisches Kontaktstück nach den Ansprüchen 1 und 2, dadurch gekennzeichnet, dass die Silberlegierung zusätzlich bis 10 Gew.-% Kadmium, Kupfer und/oder Blei enthält.

4. Elektrisches Kontaktstück nach den Ansprüchen 1 bis 3, dadurch gekennzeichnet, dass die Silberlegierung bis 0,5 Gew.-% Lithium enthält.

5. Elektrisches Kontaktstück nach den Ansprüchen 1 bis 4, dadurch gekennzeichnet, dass die Zwischenschicht mit einem Hartlot auf den Träger aufgelötet ist.

6. Elektrisches Kontaktstück nach den Ansprüchen 1 bis 5, dadurch gekennzeichnet, dass die Kontaktauflage aus Silber/Zinnoxid besteht.

**Claims**

1. An electrical contact piece consisting of a silver/metal oxide contact layer, a carrier of copper or iron and an intermediate layer, characterised in that the intermediate layer consists of a silver alloy containing from 2 to 12% by weight of tin, indium and/or germanium, and the remainder silver.

2. An electrical contact piece according to Claim 1, characterised in that the silver alloy contains from 6 to 10% by weight of tin, indium and/or germanium.

3. An electrical contact piece according to Claims 1 and 2, characterised in that the silver alloy additionally contains up to 10% by weight of cadmium, copper and/or lead.

4. An electrical contact piece according to Claims 1 to 3, characterised in that the silver alloy contains up to 0,5% by weight of lithium.

5. An electrical contact piece according to Claims 1 to 4, characterised in that the intermediate layer is soldered onto the carrier using a hard solder.

6. An electrical contact piece according to Claims 1 to 5, characterised in that the contact layer consists of silver and tin oxide.

**Revendications**

1. Pièce de contact électrique comportant un matériau argent/oxyde métallique servant de revêtement de contact, un support en cuivre ou en fer et une couche intermédiaire, pièce de contact caractérisée en ce que la couche intermédiaire est constituée par un alliage d'argent contenant 2 à 12% en poids d'étain, d'indium et/ou de germanium, le reste étant de l'argent.

2. Pièce de contact selon la revendication 1, caractérisée en ce que l'alliage d'argent contient de 6 à 10% en poids d'étain, d'indium et/ou de germanium.

3. Pièce de contact selon l'une des revendications 1 ou 2, caractérisée en ce que l'alliage d'argent contient en outre jusqu'à 10% en poids de cadmium, de cuivre et/ou de plomb.

4. Pièce de contact selon les revendications 1 à 3, caractérisée en ce que l'alliage d'argent contient jusqu'à 0,5% en poids de lithium.

5. Pièce de contact selon les revendications 1 à 4, caractérisée en ce que la couche intermédiaire est soudée sur le support à l'aide d'une soudure forte.

6. Pièce de contact selon les revendications 1 à 5, caractérisée en ce que le revêtement de contact est constitué d'argent/oxyde d'étain.